Europäisches Patentamt

European Patent Office

Office européen des brevets

(19)

(11) Publication number: **0 040 492**
**A2**

(12) **EUROPEAN PATENT APPLICATION**

(21) Application number: **81301999.9**

(22) Date of filing: **06.05.81**

(51) Int. Cl.³: **B 29 D 3/02**
**B 29 D 23/00**

(30) Priority: **21.05.80 JP 67379/80**
**29.05.80 JP 71667/80**

(43) Date of publication of application:
**25.11.81 Bulletin 81/47**

(84) Designated Contracting States:
**DE FR GB**

(71) Applicant: **MITSUBISHI RAYON CO. LTD.**
**3-19, Kyobashi 2-chome Chuo-Ku**
**Tokyo 104(JP)**

(72) Inventor: **Aihara, Tadashi**
**610, Aza Toita Daiko-cho**
**Nagoya-shi(JP)**

(72) Inventor: **Yoshioka, Naonori**
**350-85, Aza Hakusan Oaza Maritakashinden**
**Nagoya-shi(JP)**

(74) Representative: **Baillie, Iain Cameron et al,**
**c/o Ladas & Parry Blumenstrasse 48**
**D-8000 München 2(DE)**

(54) Moulding material for fibre reinforced plastic tubes.

(57) A moulding material for forming tubes of fibre reinforced resins comprises a central tube substantially impervious to fluid pressure, at least one matrix resin tubular layer, and at least one reinforcement fibre tubular layer, each of which layers is substantially separate, the resin and fibre layers alternating and located co-axially about the central tube. The material can be formed and moulded without disturbing the arrangement of the fibres.

EP 0 040 492 A2

MOULDING MATERIAL FOR FIBRE REINFORCED PLASTIC TUBES

Background of the invention

Field of the invention

This invention relates to the moulding material useful for forming fibre reinforced plastic tubes, particularly bent tubular structures.

Fibre reinforced plastic tubes demonstrate superior physical properties such as light weight and high strength and are used not only for the shafts of golf clubs, fishing rods and other straight tubes but also for tone arms of record players, putter shafts, tennis racket frames, badminton racket frames, pipe chain frames, bicycle frames and other curved tubular structures.

The moulding material with which this invention is concerned and which can be used to form tubes features a reinforcing fibre tubular layer that is kept substantially separate from a matrix resin layer. Therefore, the material is suitable for forming fibre reinforced plastic tubes according to the internal pressure moulding process using a moulding tool especially for forming curved tubes.

With this moulding material the freedom of the reinforcing fibres to expand and contract in the process of forming is not interfered with by the matrix resin. Thus, the moulding material can be formed into tubular structures free from defects such as an undesirable bend in the reinforcing fibres so that various physical properties such as strength, of the reinforcing fibres are maintained unchanged.

Description of the prior art

To form the fibre reinforced plastic tubes there have been used a filament winding process and a mandrel forming process using a lapping tape.

In addition to these processes, another process has been developed. In this process a moulding material comprising a matrix of resin-impregnated reinforcing fibres is wound around the outside periphery of a flexible rubber tube and is set in a moulding tool for pressure moulding. Pressurized gas is then charged into the rubber tube for pressure moulding by forcing this moulding material into close contact with the inner surface of the moulding tool.

Both the filament winding process and mandrel forming process may subject the fibre reinforcing plastic tubular layer to wrinkling in the moulding process.

Accordingly, each of these processes requires considerable care in forming the fibre reinforced plastic tubes to ensure the reinforcing fibre tubular layer is free of wrinkles and thus maintains unimpaired the various physical properties of the reinforcing fibres.

Moreover, these processes involve another problem in that mandrel stripping cannot be used in forming a fibre reinforced plastic curved tube.

As a result, it is difficult to form the fibre reinforced plastic curved tube with the features of light weight, high strength and high elasticity.

As it is clear from the above, these processes require some improvements in order to eliminate these problems.

The process of moulding already described employing pressurized gas inside a flexible rubber tube for pressure moulding is more suitable for forming curved tubes than the filament winding and mandrel forming processes. This pressure moulding process is practised with a moulding material consisting of a matrix of reinforcing fibres impregnated with resin wound around the outside periphery of a flexible rubber tube. In this case the freedom of inter-fibre movement of the reinforcing fibres is lost by reason of the impregnation with the matrix resin which results in wrinkling of the reinforcing fibres. The orientation of the fibres is disturbed as the moulding material is loaded inside the moulding tool.

Thus this pressure moulding process has thus far been applied with difficulty to form the fibre reinforced plastic tubes with the desired strength, elasticity, periodic damping characteristics, and other physical properties of the reinforcing fibres.

Summary of the invention

The moulding material of this invention and provided for forming fibre reinforced plastic tubes, features a structure consisting of tubular layers of matrix resin and a tubular layer of reinforcing fibres, both being fitted separately around the outside periphery of a flexible tube for pressure moulding.

According to the invention therefore there is provided in a tubular moulding material comprising a resin matrix and fibre reinforcement, the improvement that a matrix resin tubular layer and a reinforcing fibre tubular layer are provided co-axially and substantially separate from each other about a central tube which is substantially impervious to fluid pressure.

Therefore, both flexibility and inter-fibre movement of the reinforcing fibres woven in a tubular layer are assured of being free from interference from the matrix resin.

The moulding material of this invention results in the reinforcing fibres being free of undesirable wrinkles as well as avoiding disarrangement of the direction of the fibres while loading into a moulding tool. The result is that the tubes moulded from the moulding material of this invention, are superior not only in strength and elasticity but also in full availability of the sound wave propagating characteristics of the reinforcing fibres and the periodic damping characteristics.

Brief description of the drawings

Figure 1 is an oblique view of one sample of the moulding material of the invention for forming fibre reinforced plastic tubular structures.

Figures 2a, 2b, 2c give a sectional view of one structure of a moulding material of this invention, for forming fibre reinforced plastic tubes.

Figure 3 shows how a racket frame is moulded, using the moulding material of this invention, and a moulding tool.

Brief description of the invention

The moulding material concerned with this invention for use in manufacturing a fibre reinforced plastic tube has a structure which comprises a matrix resin tubular layer and a reinforcing fibre tubular layer provided separately over the outside periphery of the flexible tube.

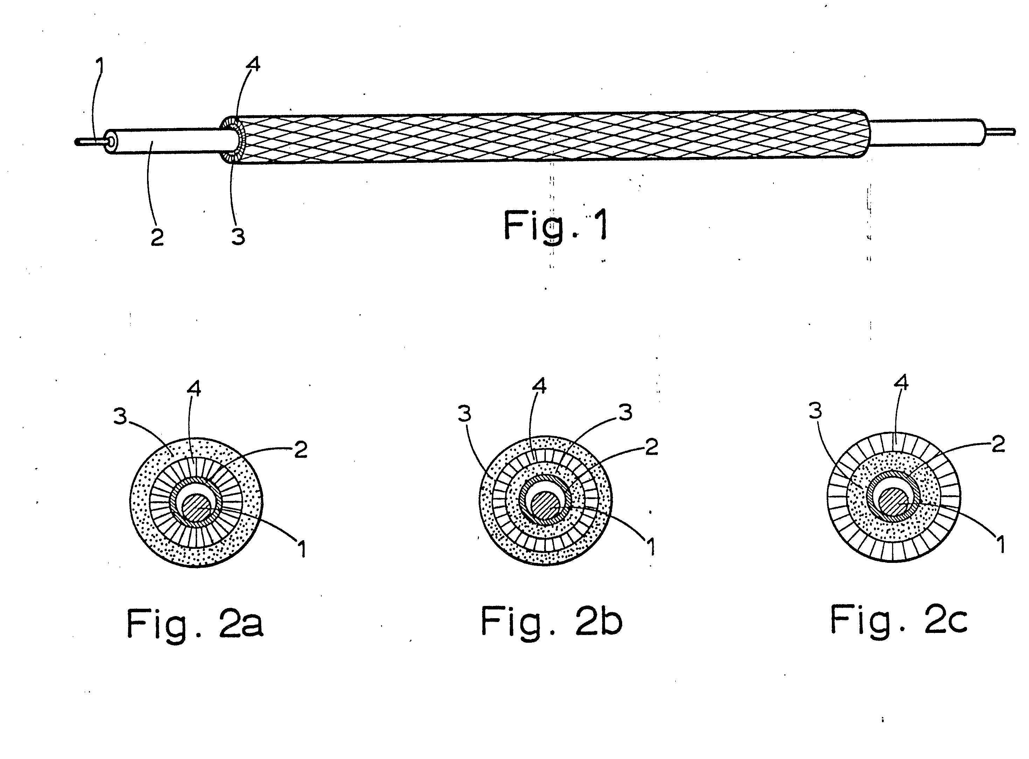

In Fig. 1 is an oblique view of one sample of this moulding material. In Figs. 2(a), (b) and (c) are the structural views in section of the samples. The flexible tube used for preparing the moulding material of this invention can be pressurized by gas or other fluid charged into the tube.

The flexible tube is either manufactured from an expansible material, i.e. one with elastic properties, rubber tube made of natural or synthetic rubber, or a tube manufactured from a substance non-permeable to gases or substantially non-permeable substance and processed from a thermoplastic such as polypropylene, polyamide, polyester, ABS resin or polyvinyl chloride.

If a flexible rubber tube is used in preparing the moulding material of this invention, it contracts to a certain degree when the gas pressure applied inside this rubber tube to form a fibre reinforced tube is reduced. Therefore, it is desirable to remove the flexible rubber tube after the forming is over.

On the other hand a flexible tube made of one of the thermoplastic resins specified above, and which is used for preparing the moulding material of this invention, does not contract and remains in close contact with the inner wall of a fibre reinforced plastic tube even after the gas pressure applied inside the expansion tube is reduced.

It is accordingly unnecessary to remove the expansion tube.

Both these flexible tubes and expansible rubber tubes must not be significantly gas permeable so that the gas which has been charged into a tube will not leak out via the tube wall. Thus a substantially impermeable inner or support tube as employed in this invention is a tube which can be pressurized by a fluid for sufficient time to complete formation of the desired tube product.

The reinforcing fibre used for preparing the moulding material of this invention can be an inorganic fibre, such as glass fibre, carbon fibre, silicon carbide fibre, boron fibre, or alumina fibre or an organic fibre such as aromatic polyamide fibre, high elastic polyester fibre or can be a combination of one or more inorganic fibres, organic fibres or both.

In one method of filling a tubular layer of the reinforcing fibres over the outside periphery of the said flexible tube, the reinforcing fibres are braided into a tubular structure which is in turn fitted over the outside periphery of the flexible tube; in another method the reinforcing fibres are braided into a sheet or tape which is then wound around the outside periphery of the flexible tube; in a third method a filament is wound over the outside periphery of the flexible tube, using the reinforcing fibres.

It is desirable that the amount of the reinforcing fibres used be within the range from 30 to 80% preferably 30 to 70% of the volume of the reinforced tube.

For the matrix resin layer can be employed epoxy resins, unsaturated polyester resins, phenolic resins, polyimide resins and other thermosetting resins, as well as the thermoplastic resins such as polyamide resin, acrylonitrye-styrene-butadiene copolymer, polybtylene.

The method and material of this invention requires that the matrix resin layer and the reinforcing fibre layer be substantially separate from each other at least during the initial stages of producing the tube. By separate is meant that, while they are in contact, there is no significant penetration of the fibre layer by the resin layer. Therefore, it is desirable that the matrix resin not be tacky at room temperature. By using a matrix resin whose tackiness is quite low at room temperature, the matrix resin layer can be kept substantially separate from the reinforcing fibre layer. The moulding material related to this invention is thus assured of being provided with the superior physical properties described previously.

When the moulding material undergoes forming, it is necessary that the matrix resin be molten enough to flow into and thoroughly impregnate the reinforcing fibre layer.

For the matrix resin with such physical properties as the above, it is necessary to select a resin having tackiness ranging from 10 to 500 poise at a temperature for forming.

When a thermosetting resin is used as the matrix resin, the thermosetting resin must be one having a tackiness ranging from 10 to, 500 poise at the temperature at which gelation starts. A matrix resin having a tackiness of less than 10 poise at the said temperature will be too fluid at the time of forming. A moulding material using a very tacky resin will fail to mould into quality tubes with favourable physical properties.

However, if the tackiness of the matrix resin is over 500 poise, the matrix resin will fail to show sufficient fluidity in the later stages of forming.

As a result, the molten matrix resin cannot thoroughly impregnate the reinforcing fibre layer. When forming is effected with such matrix resin the tubes will not be free of voids.

Fig. 1 gives an oblique view showing the structure of this moulding material concerned with this invention for forming tubular wares.

A core 1 is put inside flexible tube 2 so that the moulding material can be loaded easily into a moulding tool. This core 1 is made up of a wire or similar material.

In the structure there is a flexible tube 2, a matrix resin tubular layer 3 and a reinforcing fibre tubular layer 4.

Fig. 2 illustrates three different sections, each showing a varied order of arranging the matrix resin tubular layer over the reinforcing fibre tubular layer.

In Fig. 2a is shown a section of a laminated structure made up of core 1, a flexible tube 2, reinforcing fibre tubular layer 4, and matrix resin tubular layer 3, starting from the innermost.

In Fig. 2b is shown a section of a laminated structure consisting of core 1, a flexible tube 2, a matrix resin tubular layer 3, a reinforcing fibre tubular layer 4, and a matrix resin tubular layer 3, starting from the innermost.

In Fig. 2c is shown a section of a laminated structure which includes core 1, a flexible tube 2, a matrix resin tubular layer 3, a reinforcing fibre tubular layer 4, starting from the innermost.

When the moulding material is forming using a moulding tool normally the dies to be used are preheated in order to reduce the cycle time for forming. If the moulding material has an outermost matrix resin tubular layer the matrix resin may some times melt and stick to the inner surface of the dies when the moulding material is loaded into the moulding tool. In this case, the external appearance of the reinforced fibre plastic tubular product formed from the moulding material will be impaired, and the value of this tubular product decreased. However, among the variations of the moulding material related to this invention is one moulding material with the structure retaining a reinforcing fibre layer outermost which is not subject to the aforementioned problem when this moulding material is loaded into the preheated moulding tool.

Moreover, with this moulding material, resetting can be done within the moulding tool when a proper loading of the moulding material into the dies cannot be executed initially. In this way an adequate setting within the moulding tool is always ensured with this moulding material, and the reinforcing fibre layers are maintained free from bending, wrinkling, and becoming disarranged in the positioning of the fibres.

Therefore, the fibre reinforced plastic tubes formed from the moulding material of this invention, can be provided with superior physical properties.

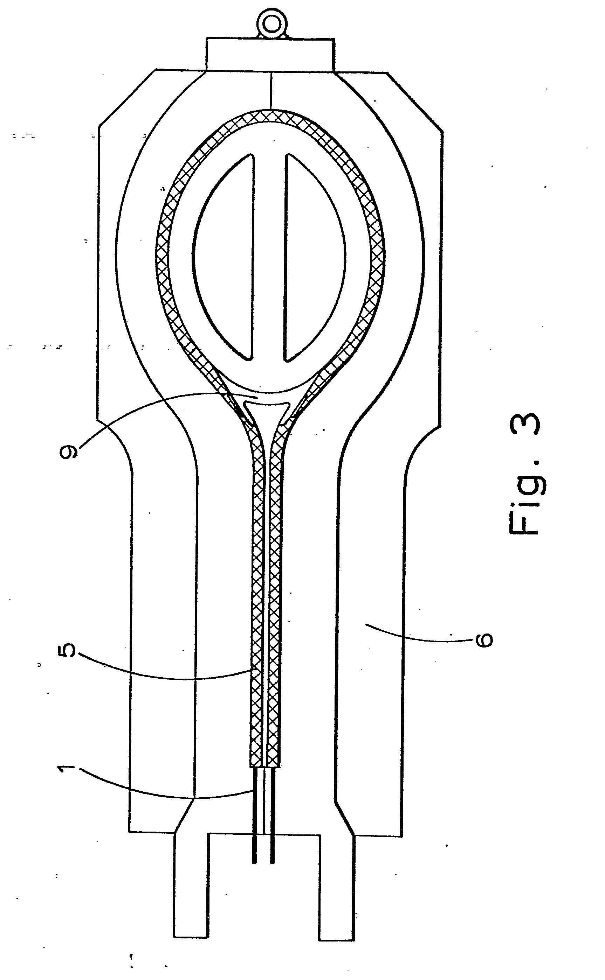

The moulding material with the laminated structure as shown in Fig. 2a and consisting of a flexible tube, a matrix resin tubular layer and a reinforcing fibre tubular layer with the specifications given in Table 1, was prepared. This moulding material 5 was loaded into moulding tool 6 as illustrated in Fig. 3, together with a fibre reinforced plastic joint 9 set within the molding tool and a pressure line 7 connected to the inner tube and then the moulding tool was clamped. The dies were then heated up to a moulding temperature.

Simultaneously, nitrogen gas was charged under pressure inside into the flexible tube at 5 $kg/cm^2$. The moulding material within the moulding tool was formed by the force of the gas pressure into a racket frame. The results are displayed in Table 1.

TABLE 1

| No | Type of Flexible tube | Moulding Material | | | | | | | | Moulding Condition | Ease of Loading into Moulding tool | Conditions of the reinforcing fibres within FRP tube |
|---|---|---|---|---|---|---|---|---|---|---|---|---|
| | | Matrix Resin | | | Reinforcement (fibre) | | | | | | | |
| | | Resin type $(g/m^2)$ | appearance of sheet at room temperature | viscosity at gelling temperature | fibre type | laminating material | usage volume | orientation angle | | | | |
| 1 | vulcanized rubber tube | epoxy resin sheet $(600g/m^2)$ | semi solid (less tackiness) | 60 poise | CF(60%) + GF(40%) | braid (each braid z layer) | 40(vol%) | $\pm 30^{\circ}$ | $150^{\circ}c$ x 30 min | good | no occurrence of wrinkling |
| 2 | polypropylene film tube | " " | " " | 100 poise | CF(50%) + GF(50%) | " " | 40(vol%) | " | $150^{\circ}c$ x 30 min | " | " " |
| 3 | vulcanized rubber tube | unsaturated polyester sheet $(600g/m^2)$ | " " | 100 poise | CF(30%) + GF(70%) | " " | 50(vol%) | " | $150^{\circ}c$ x 10 min | " | " " |
| 4 | " " | epoxy resin sheet $(600g/m^2)$ | " " | 100 poise | CF(50%) + GF(50%) | filament winding GF/CF/GF (3 layers) | 50(vol%) | $\pm 45^{\circ}/ \mp 10^{\circ}/ \mp 45^{\circ}$ | $150^{\circ}c$ x 30 min | " | " " |

0040492

| | | | | | | | | | | | | |
|---|---|---|---|---|---|---|---|---|---|---|---|---|
| 5 | polypropy-lene film tube | unsaturat-ed polyes-ter sheet (600g/m$^2$) | " " | 100 poise | CF(50%) + GF(50%) | " " | 50(vol%) | " " | | 150$^o$c x 10 min | " | " " |
| 6 | vulcanized rubber tube | epoxy res-in sheet (100g/m$^2$) | " ". | 80 poise | CF(40%) + GF(60%) | satin wea-ve cloth (hurdle wrapping) | 50(vol%) | $\pm$ 45$^o$ | | 150$^o$c x 30 min | " | " " |

NOTE:  CF – Carbon fibre, GF – Glass fibre

Comparative Example

Separately from the said moulding material, another moulding material had also been prepared. This moulding material consisted of a layer of carbon fibre braid fitted over a butyl rubber tube and having the carbon fibres placed in such a way such that the angle of the carbon fibre would be $45^O$, and a layer of the reinforcing fibres impregnated with 60 vol.% with epoxy resin capable of showing high tackiness at normal temperature.

When this moulding material was loaded into a preheated moulding tool, the matrix resin melt and stuck to the inner surface of the moulding tool. Trouble free loading could not be effected and loading was accompanied by many difficulties.

Furthermore, the reinforcing fibres were detected as having incurred bending and wrinkling at several points, showing also disorder in the arrangement of fibre angles.

On the other hand, with the moulding material of the invention, loading at room temperature was effected with the matrix resin sticking only very slightly to the inner surface of the dies. In the comparative material the reinforcing fibres were found to have many bends and wrinkles, as well as with much disorder in the angle fibre arrangement angle.

Moreover, much time was required to heat the dies up to $130^O C$, resulting in a considerably long cycle time for forming.

CLAIMS

1.     A tubular moulding material comprising a resin matrix and fibre reinforcement characterised in that a matrix resin tubular layer and a reinforcing fibre tubular layer are provided co-axially and substantially separate from each other about a central tube which is substantially impervious to fluid pressure.

2.     A moulding material according to claim 1 in which a reinforcing fibre tubular layer is provided as the outermost layer.

3.     A moulding material according to either of claims 1 and 2 wherein the central tube is a material with elastic properties.

4.     A moulding material according to either of claims 1 and 2 in which the central tube is made from ABS resin, polyvinylchloride, polypropylene, polyamide or polyester.

5.     A moulding material according to any one of claims 1 to 4 wherein the matrix resin is a thermosetting resin.

6.     A moulding material according to any one of claims 1 to 5 wherein the matrix resin is in semi-solid state at room temperature and has a low tackiness.

7.     A moulding material according to claim 6 wherein the matrix resin has a tackiness of 10 to 500 poise at a moulding temperature.

8.     A moulding material according to any one of the preceding claims wherein reinforcing fibre is in the form of a tube of braided fibres.

9.     A moulding material according to any one of claims 1 to 6 wherein the tube of reinforcing fibre is made up of a fibre texture sheet or a fibre braided tape tubularly wound.

10.     A moulding material according to any one of the preceding
claims wherein there is provided more than one of one or both
of the fibre layers and resin layers, the fibre and resin layers
alternating.

11.     A moulding material according to claim 10 wherein a tube of
fibres produced by a filament winding technique is used for an
intermediate tubular layer.

12.     A method of producing a tubular structure by moulding a
resin to incorporate a fibre reinforcement characterised in that
at least one resin matrix tubular layer and at least one tubular
layer of reinforcing fibres  are co-axially located about a central
tube which is substantially impervious to fluid pressure, the fibre
and resin layers being substantially separate and alternating, the
assembled structure is placed in a mould and fluid pressure is provided in the central tube and heat in the mould to shape the
material and cause the resin to impregnate the fibre reinforcement.

Fig. 1

Fig. 2a

Fig. 2b

Fig. 2c

0040492

Fig. 3